# EUROPEAN PATENT SPECIFICATION

(11) **EP 0 951 694 B1**
(45) Date of publication and mention of the grant of the patent: **02.03.2005**
(21) Application number: 98946663.6
(22) Date of filing: 19.10.1998
(51) Int. Cl.: G06T 5/00

(54) **METHOD AND APPARATUS FOR USING INTERPOLATION LINE BUFFERS AS PIXEL LOOK UP TABLES**
VERFAHREN UND GERÄT ZUR VERWENDUNG VON INTERPOLATIONSZEILENPUFFERN ALS PIXELTABELLEN
PROCEDE ET APPAREIL PERMETTANT D'UTILISER DES TAMPONS DE LIGNES D'INTERPOLATION EN TANT QUE TABLES DE CONSULTATION DE PIXELS

(30) Priority: 12.11.1997 US 968679
(43) Date of publication of application: 27.10.1999
(73) Proprietor: Koninklijke Philips Electronics N.V., 5621 BA Eindhoven (NL)
(72) Inventor: SCHAFFSTEIN, Michael, J., NL-5656 AA Eindhoven (NL); WALSH, Christopher, NL-5656 AA Eindhoven (NL)
(74) Representative: Faessen, Louis Marie Hubertus
(86) International application number: PCT/IB1998/001652
(87) International publication number: WO 1999/024917

(56) References cited:
- US-A- 4 799 053
- US-A- 5 469 223
- US-A- 5 502 462

## Description

### TECHNICAL FIELD

The present invention relates to video graphics and more particularly to pixel look up tables.

### BACKGROUND ART

Display devices are used to display video data in typical computer video graphics systems. The display device is typically a cathode ray tube (CRT) or flat panel liquid crystal display (LCD) monitor. The image seen on the display device is normally generated by a video graphics controller (VGC) and is typically redrawn by the VGC about 75 times per second, via a process known as display refresh.

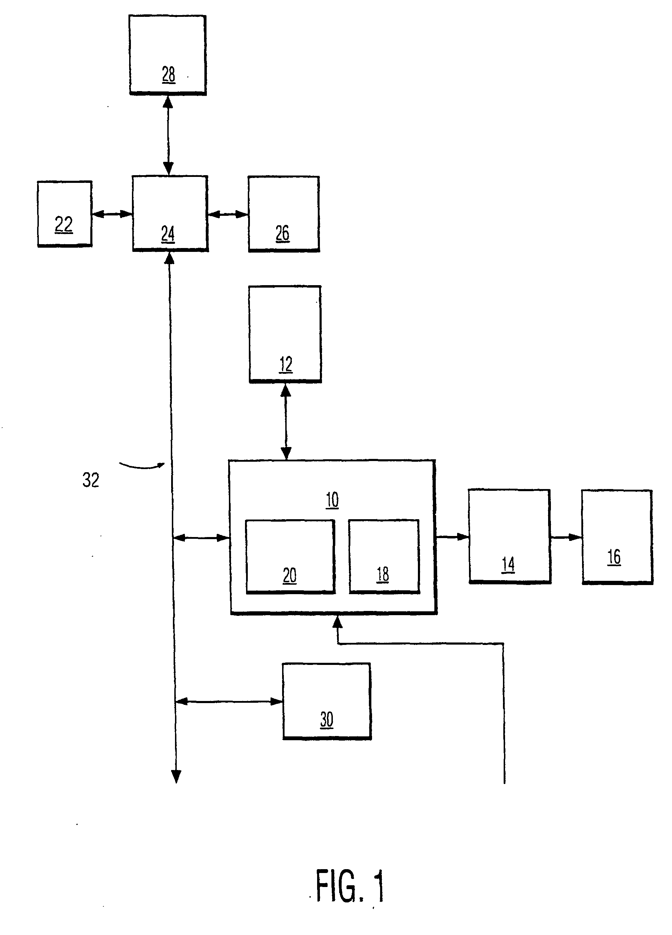

Figure 1 is a block diagram of a video graphics system used in a personal computer (PC) to drive a display device 16. The video image displayed on display device 16 is made up of thousands of individual pixels. Each pixel consists of a red, green and blue element corresponding to the red, green and blue phosphors (or LCD elements) that make up every pixel of display device 16. Each pixel has a red, green and blue intensity stored as a digital value. The digital data is stored as a linear bitmap in frame buffer memory 12, typically a dynamic random access memory (DRAM). Video graphics controller (VGC) 10 generates the video image by processing the data in frame buffer memory 12, and display controller 20 performs the display refresh.

The digital data is converted to an analog voltage level by digital-to-analog converter (DAC) 14 and transmitted to display device 16. Display device 16 uses this analog level to simultaneously fire three electron guns at the pixel being drawn. The various red, green and blue intensities produce the colors visible on display device 16.

In most systems, 8 bits are used to represent each of the red, green and blue colors. Thus each pixel requires 24 bits of information in frame buffer memory 12. For a typical sized PC screen having 1024 pixels horizontally and 768 pixels vertically, the amount of memory needed to store the image is 1024 x 768 x 24 bits (total of 2.25 Mbytes), assuming 24 bits per pixel (bpp). Larger screen sizes use correspondingly larger amounts of frame buffer memory 12. Similarly, systems that increase the number of bpp require more frame buffer memory 12.

One known way to reduce the number of bits stored in frame buffer memory 12 is to utilize a look up table (LUT) 18, typically implemented in static random access memory (SRAM) and contained on VGC 10. Essentially, LUT 18 allows an 8 bit value stored in frame buffer 12 to be used as an index to address 256, 24-bit values stored in LUT 18, each 24-bit value representing full 24 bpp color. VGC 10 uses data stored in 8 bpp format in frame buffer memory 12 as an input to LUT 18 and maps each 8 bit input onto a 24 bit color.

Thus, although only 256 (2⁸) possible color are available in 8 bpp mode, the 256 colors are visible as 24 bpp colors. In this manner, a seascape image can have 256 different, full 24 bpp blue shades displayed on display device 16 and appear almost indistinguishable from an image stored in 24 bpp format. One advantage of using LUT 18 is that for each pixel on the monitor, only 8 bits need to be stored in frame buffer memory 12. Thus, the amount of information stored in frame buffer memory 12 is reduced by a factor of three and the amount of data flowing out of frame buffer memory 12 is reduced by a factor of three.

Due to space and cost constraints, most VGCs contain a single 8X256 LUT to generate the video output image. A drawback with using a single 8X256 LUT is that the resulting output images may produce inaccurate and undesirable results when multiple images requiring different color indexing are contained in the same image. For example, suppose most of the 256 colors in LUT 18 are dedicated to shades of blue. This may produce accurate picture quality when most of the image data represents an underwater seascape. However, suppose a video image such as a yellow-red submarine is overlayed on top of this seascape. Since most of LUT 18 is dedicated to shades of blue, the submarine will be displayed in less accurate colors.

Additional LUTs 18 may improve the accuracy of the output image. However, a drawback with using multiple LUTs is that the cost of VGC 10 is greatly increased. Another drawback with such an approach is that space constraints often do not allow for a second LUT to be included on VGC 10.

### SUMMARY OF THE INVENTION

There exists a need for a video graphics system that produces accurate output image data without increasing the hardware requirements of the video graphics controller. There is also a need for a video graphics system that produces accurate output image data that includes a wide variety of available color information.

These and other needs are met by the present invention, where an interpolation line butter is used in both vertical scaling and in color mapping input color data to output color values.

According to one aspect of the invention, a system for processing image data includes
a selecting device configured to output a first control signal and a second control signal. The system also includes a line buffer memory coupled to the selecting device with the line buffer memory configured to store pixel data representing a horizontal line of pixels, based on the first control signal The system further includes
a scaling device coupled to the line buffer memory and configured to interpolate the stored line of pixel data with an incoming line of pixel data, and output interpolated pixel data. Additionally, the system includes a display controller coupled to the line buffer memory and configured to reuse the line buffer memory as a color-look up memory, based on the second control signal. This configuration enables the system to use the line buffer memory as both a line buffer for vertical interpolation of pixel data and as a LUT for mapping input pixel data to output color values.

US 5,469,223 discloses a video processing circuit, having a video memory buffer, a line buffer and a vertical expansion circuit. The line buffer receives lines of pixel data from the memory buffer for temporary storage, and outputs the lines of pixel data to the vertical expansion circuit. The vertical expansion circuit expands the vertical height of the pixel image by inserting an interpolated line of pixels between two original lines of pixels stored in the video memory buffer. US 5,502,462 discloses the use of a look-up table for color code expansion, in a method and apparatus for displaying raster based images such that they appear to have relatively high resolution and a wide variety of colors and/or shades per displayed frame, including pixel interpolation. Both documents, however, do not disclose the use of a line buffer memory as a color look-up table memory, depending on a control signal of a selecting device.

Another aspect of the present invention provides a method for processing image data in an image data processing system configured to operate in a plurality of modes. The method includes writing pixel data to a line buffer memory in a first operating mode, with the pixel data representing a horizontal line of pixels. The method also includes transmitting the pixel data from the line buffer memory to a scaling device configure to interpolate the stored pixel data with an incoming line of second pixel data, and output interpolated pixel data. The method further includes reusing the line buffer memory in a second operating mode as a color look-up memory, thereby providing dual use of the line buffer memory as both a line buffer for vertical interpolation of pixel data and as a LUT for mapping input pixel data to output color values.

Other objects and advantages of the present invention will become readily apparent to those skilled in this art from the following detailed description. The embodiments shown and described provide illustration of the best mode contemplated for carrying out the invention. The invention is capable of modifications in various obvious respects, all without departing from the invention. Accordingly, the drawings are to be regarded as illustrative in nature, and not as restrictive.

### BRIEF DESCRIPTION OF THE DRAWINGS

Figure 1 is a block diagram of a computer system using a video graphics controller.
Figure 2 is a block diagram of a video graphics controller utilizing line buffers.

Figure 3 is a block diagram of a video graphics control system according to an embodiment of the present invention.

Figure 4 is a flow diagram illustrating an embodiment of the present invention.

### DETAILED DESCRIPTION OF ILLUSTRATED EMBODIMENTS

The disclosed embodiment uses a line buffer on a video graphics controller to store a horizontal line of pixel data for "upscaling" an input image. The present invention also uses the line buffer as a look up table (LUT) to enhance the color accuracy of output images. A description will first be given of a line buffer used for vertically upscaling an input image, followed by the method and apparatus for using a line buffer as a pixel LUT, as well as for vertically upscaling an input image.

### LINE BUFFERS

As discussed earlier, displaying accurate video images on a typical computer display device is often difficult. Further, the use of computer display devices to display real-time video images is becoming more common, further increasing the complexity associated with displaying accurate video images. Real-time video data may come from a TV tuner, digital camcorder, digital camera or any other video input source. With reference to Figure 1, video data is normally input to VGC 10 directly, since VGC 10 performs the processing associated with displaying the video data, or alternatively video data is input via I/O chipset 26.

To display the incoming video stream in real time, data could be continuously written to frame buffer 12 and display controller 20 could perform the display refresh. This would allow the video to be displayed on the screen no later than one screen refresh after it was written into frame buffer memory 12. However, a problem with this approach is that the incoming video stream often does not have the same display refresh rate as display device 16. The video input source often has a refresh rate of approximately 24-30 frames per second. whereas the display device refresh rate is approximately 75 frames per second. Continuously writing to frame buffer 12 and performing a typical refresh would cause the displayed video image to contain half of one frame and half of a subsequent frame, creating a tearing effect.

An alternative approach to displaying real-time video data is to store the video input into an unused portion of frame buffer memory 12, known as off-screen memory. The data in off-screen memory is then moved to the part of name buffer memory 12 used to perform the display refresh in a manner that minimizes tearing and other adverse visual effects.

However, since there is not an infinite amount of off screen memory available in frame buffer memory 12, it may be advantageous to reduce the amount of information stored. Additionally, the source video image is often smaller in resolution (usually 320 x 200 pixels or 720 x 480 pixels) than the computer screen resolution (1024 x 768 pixels or 1280 x 1024 pixels). Therefore, if it is desired to show the video image using the entire available display device 16 surface, either the resolution of display device 16 needs to be reduced or the video image resolution needs to be increased.

Generally, the only practical solution to this problem is to increase the video image to fit the screen size. This can be done using "front end" processing where VGC 10 takes the small image stored in off-screen frame buffer memory 12, upscales it (increases the resolution to the desired proportions) and writes the image back to frame buffer memory 12. A second method uses a "back-end" processing approach where display controller 20 upscales the image on the fly as it is being displayed. This approach has the advantage of reducing the need for accessing frame buffer memory 12 and does not use any extra memory for the operation.

In this manner, display controller 20 upscales a video source image by the necessary factor so that the video source image fits the entire display device 16. Since a typical 300 x 200 pixel video input image does not have all the pixels needed to be shown on the full display device 16, VGC 10 generates the extra pixels. One approach to generating these needed pixels is to simply duplicate pixels to fill the extra portions of the screen. This approach is cheap, but results in a blocky and generally unacceptable image.

Another approach is to fill the in-between pixels with blended pixels. For instance, consider pixel #0 in line #0 of the source image and pixel #0 of line #1 of the source image. The destination or display device 16 image will re-use these pixels a few times to fill in the information missing from the source image. Destination pixels may be formed by taking a fractional combination of two pixels and adding the result together, known as interpolating the pixels. Thus, the destination pixel is neither the pixel from line #0 or line #1, but some combination (e.g. 30% and 70%, respectively) of the two pixels. The result of interpolation is a much more natural, smooth upscaled image.

The interpolation used in scaling occurs both horizontally and vertically. Therefore, every destination pixel displayed on the monitor is composed of four source pixels. Display controller 20 operates on a single horizontal line of pixel data at a time. Therefore, it is not difficult to be able to access the previous horizontal pixel needed to perform the horizontal interpolation. However for vertical interpolation, display controller 20 needs to simultaneously blend pixels from two different horizontal lines. This is problematic since display controller 20 operates on a single horizontal line of pixel data at a time. To alleviate this problem, a memory device stores the previous horizontal line of pixel data on VGC 10 so that display controller 20 does not need to re-fetch previous lines of pixel data from frame buffer memory 12. The memory device is typically implemented as an SRAM and is known as a line buffer.

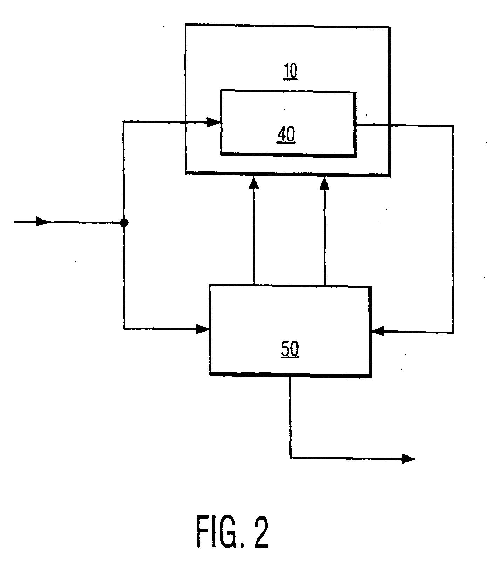

Figure 2 is a block diagram of VGC 10 that includes line buffer 40. Current VGCs which perform back-end video scaling utilize at least one line buffer 40 to minimize access to frame buffer memory 12. With reference to Figure 2, vertical scaler controller 50 performs the vertical scaling of the video input.

Line buffer 40 receives the video input data from the video input source, via frame buffer memory 12. Display controller 20 steps through the source video image line-by-line and continuously puts the last fetched horizontal line into line buffer 40, as it fetches a new line from frame buffer memory 12. This saves processing time associated with fetching and re-fetching data from frame buffer memory 12.

Vertical scaler controller 50 includes logic that keeps track of when the current line of pixel data needs to be written into line buffer 40 and sends a write address strobe signal to line buffer 40 at the appropriate time. Line buffer 40 is dual ported so the current line can be written into at the same time the previous line can be read out.

Vertical scaler controller 50 vertically interpolates the current line of pixel data with the previous line of pixel data, i.e. determines the percentage of each pixel used in the output pixel, and outputs the interpolated pixel. The interpolated vertical pixel is combined with the horizontally scaled pixel and then mapped via LUT 18 into 24 bpp color.

In the prior art, line buffers are only used for vertically interpolating pixels when an input video image must be upscaled. In order to support the vertical interpolation process, a line buffer must be configured to store an entire horizontal line of pixel data, thus taking up a considerable amount of chip space on VGC 10. Since chip space is at a premium on VGC 10, using chip space for the upscaling function is costly.

As described earlier, a problem exists when an 8 bpp mode is used and LUT 18 is used to expand the pixels to 24 bpp color. The 8 bpp indexed mode using LUT 18 provides only 256 colors, albeit 24 bpp colors.

### LINE BUFFER/PIXEL LUT

The present invention is directed to a method and apparatus for using a line buffer to increase the number of colors available for output images displayed on display device 16 and for use in the upscaling an input image.

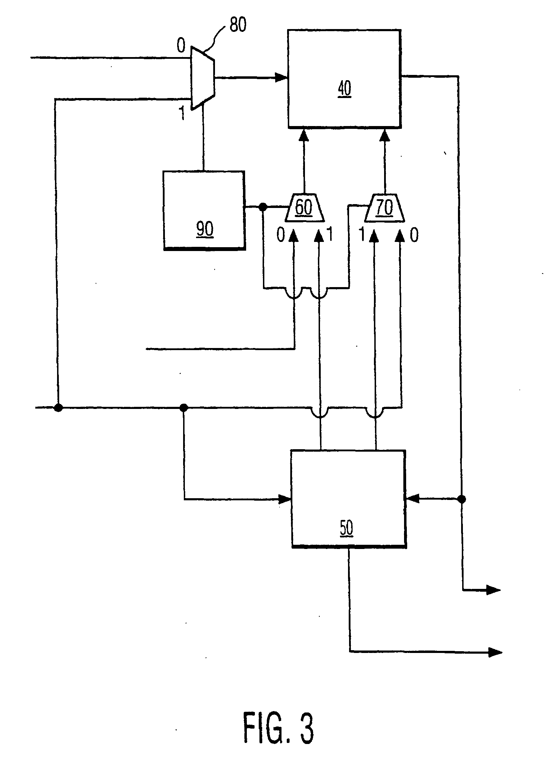

Figure 3 is an exemplary block diagram of a video graphics system according to an embodiment of the invention. As described earlier, video input data is initially stored in frame buffer memory 12. VGC 10 retrieves the video pixel data and inputs the data to vertical scaler controller 50. Vertical scaler controller 50 operates to control when the current line of pixel data is written into line buffer 40, as discussed earlier. However, in the embodiment disclosed in Figure 3, line buffer 40 is also used to store a second LUT.

For example, in a first mode of operation, line buffer 40 operates. as a typical line buffer 40 used in vertically interpolating pixels. As described above, this operation includes storing the current line of pixel data so that vertical scaler controller 50 can access the data for vertical interpolation. However, in a second mode of operation, line buffer 40 operates as a LUT. In this manner, VGC 10 includes a second table of full 24 bpp colors for display on display device 16.

As shown in Figure 3, the video graphics system includes a selecting device 90 that provides an input to multiplexers 60, 70 and 80. In the first mode, multiplexers 60, 70 and 80 enable line buffer/LUT 40 to operate as a typical line buffer used in interpolating pixel data. However, when selecting device 90 provides a second input to multiplexers 60, 70 and 80. line buffer/LUT 40 operates as a LUT. In this second mode, the full 24 bpp colors are written to line buffer 40 in the same manner the full 24 bpp colors are written to LUT 18. In the exemplary embodiment, CPU 22 operates as selecting device 90 and signals multiplexers 60, 70 and 80 via peripheral component interconnect (PCI) bus 32. CPU 22) operates according to instructions stored in system memory 28, retrieved via bridge chipset 24. Alternatively, selecting device 90 could be any PCI host device communicating with VGC 10 over PCI bus 32. For example, selecting device 90 could be network controller 30.

In the exemplary embodiment, selecting device 90 sends a "high" signal to multiplexers 60, 70 and 80 to enable line buffer/LUT 40 to operate as a typical line buffer. Multiplexers 60, 70 and 80 receive the "high" signal and operate to write and read data to/from line buffer/LUT 40 from frame buffer memory 12. Vertical scaler controller 50 controls the writing/reading of data from line buffer 40 for vertically interpolating pixels.

However, if selecting device 90 sends a "low" signal to multiplexers 60, 70 and 80, multiplexers 60, 70 and 80 operate to transmit color data to line buffer/LUT 40. The color data is written to line buffer 40 in the same manner that LUT 18 is written. That is, CPU 22 or any other PCI host device writes the desired 256, 24 bpp indexed colors from a system memory to line buffer/LUT 40 via multiplexer 80. Then, when an input image containing 8 bpp is received by display controller 20, the 8-bit value is transmitted via multiplexer 70 to line buffer/LUT 40, operating as an LUT. Display controller 20 maps the 8-bit value to a 24 bpp color value and transmits the output value to DAC 14 for conversion to an analog value for use by display device 16.

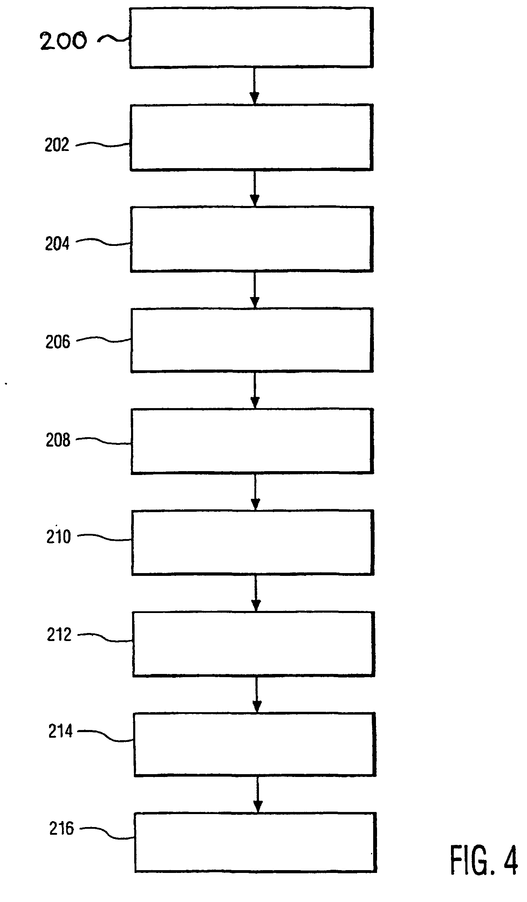

Figure 4 is a flow diagram illustrating an exemplary scenario of using line buffer/LUT 40 as both a line buffer and a LUT. As discussed earlier, any PCI host device or any other control device can be used to control the video graphics system of the present invention. The embodiment described in detail below assumes that CPU 22 is the control device.

At step 200, CPU 22 selects the operating mode of VGC 10. CPU 22 determines the operating mode based on whether image upscaling is necessary. For illustrative purposes, assume CPU 22 determines at step 200 that image upscaling is not necessary. CPU 22, at step 202, sends a control signal to multiplexers 60, 70 and 80 selecting the "low" input for the respective multiplexers.

Next, CPU 22 writes 256, 24 bpp color values to line buffer/LUT 40 via multiplexer 80, at step 204. The 24 bpp values are determined by CPU 22 based on a variety of factors. For example, CPU 22 may have already stored 256, 24 bpp values dedicated to mostly blue shades in LUT 18. Therefore, CPU 22 may write 256, 24 bpp colors devoted to mostly yellow-red shades (or any other colors) to line buffer/LUT 40. In this manner, CPU 22 increases the number of output colors available on display device 16.

At step 206, display controller receives video pixel data stored in 8 bpp mode from frame buffer memory 12. Display controller 20 sends a read address signal to multiplexer 70 to map the 8-bit value for the current pixel to an output 24-bit color. The read address signal is the current pixel value in the horizontal stream of pixels. Line buffer/LUT 40 outputs the appropriate 24 bpp value based on the input 8 bpp pixel value, at step 208 for input to DAC 14 and then to display device 16.

The above description for steps 200-208 assumes that CPU 22 determines that video upscaling is not required. Assume that after step 208, CPU 22 determines that vertical upscaling is required. CPU 22 sends a control signal to multiplexers 60, 70 and 80 selecting the "high" input for the respective multiplexers, at step 210.

Next, vertical scaler controller 50 operates to receive video pixel data from frame buffer memory 12. At step 212, vertical scaler controller 50 sends a write address strobe signal to multiplexer 60 to write the current horizontal line of pixel data to line buffer/LUT 40.

As vertical scaler controller 50 performs the interpolation of two lines of video pixel data, vertical scaler controller 50 sends a read address signal to line buffer/LUT 40, via multiplexer 70 at step 214. The read address signal represents the current horizontal pixel that vertical scaler controller 50 is interpolating and vertical scaler controller 50 reads the appropriate horizontal pixel from the previous line of pixel data stored in line buffer/LUT 40. Vertical scaler controller 50 outputs the interpolated pixel data at step 216 to create the upscaled output image. In this manner, VGC 10 utilizes line buffer/LUT 40 when vertical upscaling is necessary and also utilizes line buffer/LUT 40 as a LUT when vertical upscaling is not necessary. This use of line buffer/LUT 40 increases the number of colors available for display without increasing the memory requirements of VGC 10.

For example, as discussed earlier, assume that most of a particular image may is an underwater seascape. In this situation, most of LUT 18 may be devoted to various shades of blue. However, when a yellow-red submarine is overlayed onto the seascape, LUT 18 does not contain the 24 bpp colors representing the yellow-red shades. However, assume that the PCI host device controlling the system devoted most of the 256, 24-bit colors stored in line buffer/LUT 40 to various shades of yellow and red. In this case, the PCI host device selects line buffer/LUT 40 for mapping the 8 bpp input colors for the submarine to 24 bpp output colors. Alternatively, logic on VGC 10 can be used to select the appropriate LUT for outputting 24 bpp output colors. In this manner, the seascape image with a yellow-red submarine can be more accurately represented using line buffer/LUT 40 than when just the single LUT 18 with mostly blue shades represented is used.

The PCI host device (CPU 22 in the exemplary embodiment) used to store the color values into line buffer/LUT 40 may choose from any number of desired colors and store these color values in line buffer/LUT 40 for use by VGC 10. However, the actual color values stored in line buffer/LUT 40 depends on a variety of factors including the desired overall accuracy of the output image.

In the exemplary embodiment, the size of line buffer 40 is 768 deep x 24 bits wide. Thus, line buffer/LUT 40 can be partitioned into three LUTs, further increasing the number of colors available for display on display device 16. However, the number of additional LUTs available depends on the size of the line buffer 40. Further, VGC 10 can be used with line buffer/LUT 40 acting as the only LUT(s) when space constraints on VGC 10 do not permit LUT 18 to co-exist with the other components on VGC 10.

Additionally, the controlling PCI host device may be used to control which LUT to use for various parts of the image data received. Logic within VGC 10 or from an outside control device may select which of the plurality of LUTs to use to map the input pixel data to the full 24 bpp color. Further, although the exemplary embodiment assumes a system with 8 bpp stored in frame buffer memory 12 and an 8X256 LUT, any other video processing system utilizing any other number of bits per pixel may be used without departing from the concept of the invention.

Described has been a method and apparatus that uses a line buffer for interpolating pixels for upscaling an image and as a look up table for increasing the number of output colors available for display on a display device. As described above, the display device can be any type of display device such as a CRT, LCD display or any other display device. An advantage of the invention is that the system provides for more accurate output data without increasing the hardware requirements. Another advantage of the invention is that the number of possible colors available for display increases with little additional processing by the system. Another advantage of the invention is that it can easily be implemented without specialized hardware.

In this disclosure, there is shown and described only certain preferred embodiments of the invention, but, as aforementioned, it is to be understood that the invention is capable of use in various other combinations and environments and is capable of changes or modifications within the scope of the invention as defined by the claims.

## Claims

1. A system for processing image data comprising:
- a selecting device (90) configured to output a first control signal and a second control signal;
- a line buffer memory (40) coupled to the selecting device and configured to store pixel data representing a horizontal line of pixels, based on the first control signal;
- a scaling device (50) coupled to the line buffer memory and configured to interpolate the stored line of pixel data with an incoming line of pixel data, and output interpolated pixel data; and
- a display controller (20) coupled to the line buffer memory, configured to reuse the line buffer memory as a color look-up memory, based on the second control signal.

2. The system of claim 1, further comprising a color look-up table memory, the line buffer memory being used to expand a number of available look-up colors.

3. The system of claim 1, further comprising a frame buffer memory (12) coupled to the line buffer memory, the frame buffer memory configured to:
- store input pixel data, and
- transmit the input pixel data in increments representing a horizontal line of pixels to the line buffer memory, based on the first control signal.

4. The system of claim 3, wherein the display controller is further configured to receive the pixel data from the frame buffer memory and map the received pixel data to the output color value based on the stored color data in the line buffer memory, based on the second control signal.

5. The system of claim 4, wherein the color data represent a table of colors available to be displayed on a display device.

6. A method for processing image data, comprising:
- writing pixel data to a line buffer memory (40) in a first operating mode, the pixel data representing a horizontal line of pixels;
- transmitting the pixel data from the line buffer memory to a scaling device (50), configured to interpolate the stored pixel data with an incoming line of second pixel data, and output interpolated pixel data;
- reusing the line buffer memory in a second operating mode as a color look-up memory.

7. The method of claim 6, further comprising:
- writing pixel data representing data from a digital video source to a frame buffer memory (12); and
- transmitting, in the first operating mode, a single horizontal line of pixel data to the line buffer memory.

8. The method of claim 7, further comprising:
- receiving pixel data from the frame buffer memory (12), the pixel data to be displayed on a display device (16); and
- mapping, in the second operating mode, the received pixel data to output pixel data based on color data stored in the line buffer memory.

9. A video graphics controller (10) comprising:
a line buffer memory (40) configured to:
- store pixel data representing a horizontal line of pixels, based on a first control signal;
- store color data representing color information to be displayed on a display device (16), based on a second control signal;
- a scaling device (50) coupled to the line buffer memory and configured to interpolate the stored pixel data with an incoming line of second pixel data, and output interpolated pixel data;
- a display controller (20) coupled to the line buffer memory and configured to generate refresh video data for the display device.

10. The video graphics controller of claim 9, wherein the display controller is further configured to receive pixel data from a frame buffer memory (12) and map the received pixel data to output pixel data based on color data stored in the line buffer memory, based on the second control signal.

## Patentansprüche

1. System zum Verarbeiten von Bilddaten, wobei dieses System die nachfolgenden Elemente umfasst:
- eine Selektionsanordnung (90) zum Ausliefern eines ersten Steuersignals und eines zweiten Steuersignals;
- einen Zeilenpufferspeicher (40), der mit der Selektionsanordnung gekoppelt ist und vorgesehen zum Speichern von Pixeldaten, die eine horizontale Pixelzeile darstellen, und zwar auf Basis des ersten Steuersignals;
- eine Skalierungsanordnung (50), die mit dem Zeilenpufferspeicher gekoppelt ist und vorgesehen zum Interpolieren der gespeicherten Pixeldatenzeile mit einer eintreffenden Pixeldatenzeile, und zum Ausliefern interpolierter Pixeldaten; und
- einen Wiedergabecontroller (20), der mit dem Zeilenpufferspeicher gekoppelt ist und vorgesehen zum Neuverwenden des Zeilenpufferspeichers als Farbnachschlagtabellenspeicher, und zwar auf Basis des zweiten Steuersignals.

2. System nach Anspruch 1, weiterhin mit einem Farbnachschlagtabellenspeicher, wobei der Zeilenpufferspeicher benutzt wird zum Expandieren einer Anzahl verfügbarer Nachschlagfarben.

3. System nach Anspruch 1, weiterhin mit einem Framepufferspeicher (12), der mit dem Zeilenpufferspeicher gekoppelt ist, wobei der Framepufferspeicher zu den nachfolgenden Zwecken vorgesehen ist:
- das Speichern von Eingangspixeldaten, und
- das Übertragen der Eingangspixeldaten in Inkrementen, die eine horizontale Pixelzeile darstellen, zu dem Zeilenpufferspeicher, und zwar auf Basis des ersten Steuersignals.

4. System nach Anspruch 3, wobei der Wiedergabecontroller weiterhin dazu vorgesehen ist, die Pixeldaten aus dem Framepufferspeicher zu empfangen und die empfangenen Pixeldaten zu dem Ausgangsfarbwert zu verarbeiten, und zwar auf Basis der gespeicherten Farbdaten in dem Zeilenpufferspeicher, auf Basis des zweiten Steuersignals.

5. System nach Anspruch 4, wobei die Farbdaten eine Farbtabelle darstellen, die verfügbar ist um an der Wiedergabeanordnung wiedergegeben zu werden.

6. Verfahren zum Verarbeiten von Bilddaten, wobei dieses Verfahren die nachfolgenden Verfahrensschritte umfasst:
- das Schreiben von Pixeldaten in einen Zeilenpufferspeicher (40) in einer ersten Betriebsart, wobei die Pixeldaten eine horizontale Pixelzeile darstellen,
- das Übertragen der Pixeldaten aus dem Zeilenpufferspeicher zu einer Skalierungsanordnung (50), vorgesehen zum Interpolieren der gespeicherten Pixeldaten mit einer eintreffenden Zeile mit zweiten Pixeldaten, und zum Ausliefern von interpolierten Pixeldaten,
- das Neuverwenden des Zeilenpufferspeichers in einer zweiten Betriebsart als Farbtabellenspeicher.

7. Verfahren nach Anspruch 6, wobei dieses Verfahren weiterhin die nachfolgenden Verfahrensschritte umfasst:
- das Schreiben von Pixeldaten, die Daten aus einer digitalen Videoquelle darstellen in einen Framepufferspeicher (12); und
- das in der ersten Betriebsart Übertragen einer einzigen horizontalen Zeile mit Pixeldaten in den Zeilenpufferspeicher.

8. Verfahren nach Anspruch 7, wobei dieses Verfahren weiterhin die nachfolgenden Verfahrensschritte umfasst:
- das Empfangen von Pixeldaten aus dem Framepufferspeicher (12), wobei die Pixeldaten an einer Wiedergabeanordnung (16) wiedergegeben werden sollen; und
- das in der zweiten Betriebsart Verarbeiten der empfangenen Pixeldaten zu Ausgangspixeldaten auf Basis von Farbdaten, die in dem Zeilenpufferspeicher gespeichert sind.

9. Videographikcontroller (10), der die nachfolgenden Elemente umfasst:
- einen Zeilenpufferspeicher (40), Ausgebildet für die nachfolgenden Aufgaben:
-- das Speichern von Pixeldaten, die eine horizontale Zeile mit Pixeln darstellen, basiert auf ein erstes Steuersignal;
-- das Speichern von Farbdaten, die Farbinformation darstellen, die an einer Wiedergabeanordnung (16) wiedergegeben werden soll, basiert auf ein zweites Steuersignal;
- eine Skalierungsanordnung (50), die mit dem Zeilenpufferspeicher gekoppelt ist und vorgesehen ist zum Interpolieren der gespeicherten Pixeldaten mit einer ein treffenden Zeile mit zweiten Pixeln, und zum Ausliefern interpolierter Pixeldaten;
- einen Wiedergabecontroller (20), der mit dem Zeilenpufferspeicher gekoppelt ist und vorgesehen ist zum Erzeugen von Erneuerungsvideodaten für die Wiedergabeanordnung.

10. Videographikcontroller nach Anspruch 9, wobei der Wiedergabecontroller weiterhin dazu vorgesehen ist, Pixeldaten von einem Framepufferspeicher (12) au empfangen und die empfangenen Pixeldaten abzubilden um Pixeldaten auszuliefern, und zwar auf Basis von Farbdaten, die in dem Zeilenpufferspeicher gespeichert sind, basiert auf das zweite Steuersignal.

## Revendications

1. Système destiné à traiter des données image, comprenant :
- un dispositif de sélection (90) configuré de manière à produire un premier signal de commande et un second signal de commande ;
- une mémoire tampon de ligne (40) connectée au dispositif de sélection et configurée de manière à stocker des données de pixels représentant une ligne horizontale de pixels, sur la base du premier signal de commande ;
- un dispositif de mise à l'échelle (50) connecté à la mémoire tampon de ligne et configuré de manière à interpoler la ligne stockée de données de pixels avec une ligne entrante de données de pixels, et à produire des données de pixels interpolées, et
- un contrôleur d'affichage (20) connecté à la mémoire tampon de ligne, configuré de manière à réutiliser la mémoire tampon de ligne comme mémoire de consultation de couleurs, sur la base du second signal de commande.

2. Système suivant la revendication 1, comprenant en outre une mémoire de table à consulter de couleurs, la mémoire tampon de ligne étant utilisée pour étendre un certain nombre de couleurs de consultation disponibles.

3. Système suivant la revendication 1, comprenant en outre une mémoire tampon vidéo (12) connectée à la mémoire tampon de ligne, la mémoire tampon vidéo étant configurée de manière à :
- stocker des données de pixels d'entrée, et
- transmettre les données de pixels d'entrée par incréments représentant une ligne horizontale de pixels à la mémoire tampon de ligne, sur la base du premier signal de commande.

4. Système suivant la revendication 3, dans lequel le contrôleur d'affichage est en outre configuré de manière à recevoir les données de pixel de la mémoire tampon vidéo et à mapper les données de pixel reçues en la valeur de couleur de sortie, sur la base des données de couleur stockées dans la mémoire tampon de ligne, sur la base du second signal de commande.

5. Système suivant la revendication 4, dans lequel les données de couleur représentent une table de couleurs disponibles à afficher sur un dispositif d'affichage.

6. Procédé destiné à traiter des données image, comprenant :
- l'écriture de données de pixels dans une mémoire tampon de ligne (40) dans un premier mode de fonctionnement, les données de pixels représentant une ligne horizontale de pixels ;
- la transmission des données de pixels de la mémoire tampon de ligne à un dispositif de mise à l'échelle (50), configuré de manière à interpoler les données de pixels stockées avec une ligne entrante de secondes données de pixels, et à produire des données de pixels interpolées, et
- la réutilisation de la mémoire tampon de ligne dans un second mode de fonctionnement sous la forme d'une mémoire de consultation de couleurs.

7. Procédé suivant la revendication 6, comprenant en outre :
- l'écriture de données de pixels représentant des données provenant d'une source vidéo numérique dans une mémoire tampon vidéo (12), et
- la transmission, dans le premier mode de fonctionnement, d'une seule ligne horizontale de données de pixels à la mémoire tampon de ligne.

8. Procédé suivant la revendication 7, comprenant en outre :
- la réception de données de pixels provenant de la mémoire tampon vidéo (12), les données de pixels devant être affichées sur un dispositif d'affichage (16), et
- le mappage, dans le second mode de fonctionnement, des données de pixels reçues en des données de pixels de sortie, sur la base de données de couleur stockées dans la mémoire tampon de ligne.

9. Contrôleur vidéographique (10) comprenant :
une mémoire tampon de ligne (40) configurée pour :
- stocker des données de pixels représentant une ligne horizontale de pixels, sur la base d'un premier signal de commande ;
- stocker des données de couleur représentant des informations de couleur destinées à être affichées sur un dispositif d'affichage (16), sur la base d'un deuxième signal de commande ;
- un dispositif de mise à l'échelle (50) connecté à la mémoire tampon de ligne et configuré de manière à interpoler la ligne stockée de données de pixels avec une ligne entrante de deuxièmes données de pixels, et à produire des données de pixels interpolées;
- un contrôleur d'affichage (20) connecté à la mémoire tampon de ligne et
configuré pour générer des données vidéo rafraîchies pour le dispositif d'affichage.

10. Contrôleur vidéo graphique suivant la revendication 9, dans lequel le contrôleur d'affichage est en outre configuré pour recevoir des données de pixels provenant d'une mémoire tampon vidéo (12) et mapper les données de pixels reçues en des données de pixels de sortie sur la base de données de couleur stockées dans la mémoire tampon de ligne, sur la base du deuxième signal de commande.
